# EUROPEAN PATENT SPECIFICATION

(11) **EP 0 932 930 B1**
(45) Date of publication and mention of the grant of the patent: **14.08.2002**
(21) Application number: 97944919.6
(22) Date of filing: 17.10.1997
(51) Int. Cl.: H02M 7/538, H05B 39/04

(54) **ELECTRONIC POWER CONTROL HAVING A SWITCHED-MODE POWER SUPPLY**
ELEKTRISCHE LEISTUNGSSTEUERUNG MIT GETAKTETER LEISTUNGSVERSORGUNGSSCHALTUNG
COMMANDE DE PUISSANCE ELECTRONIQUE COMPRENANT UNE ALIMENTATION A DECOUPAGE

(30) Priority: 18.10.1996 FI 964182
(43) Date of publication of application: 04.08.1999
(73) Proprietor: Oy Lexel Finland AB, 02200 Espoo (FI)
(72) Inventor: SAIRANEN, Martti, FIN-01800 Klaukkala (FI); SALONEN, Olli, FIN-02230 Espoo (FI)
(74) Representative: Tanhua, Pekka Vilhelm
(86) International application number: FI9700630
(87) International publication number: WO9818199

(56) References cited:
- DE-A- 4 403 707
- GB-A- 2 085 243
- PATENT ABSTRACTS OF JAPAN vol. 017, no. 367 (C-1082), 12 July 1993 & JP 05 058777 A (CANON INC), 9 March 1993,

## Description

The invention relates to an electronic power control having a switched-mode power supply, especially for use in a dimmer application, according to the introductory part of the independent patent claim. The electronic power control according to the invention is especially meant to be used for controlling the lighting of one or more halogen lamps.

There is a prior art electronic power control having a switched-mode power control with a half bridge control unit and a switching unit with two switching elements, such as power field-effect transistors arranged in half bridge configuration. The control outputs of the half bridge control unit are connected to the gates of the field-effect transistors. The half-bridge control unit also includes an oscillator for controlling the switching time of the switching elements and thereby the electrical power fed to the load by means of changing the duty cycle of the oscillator output voltage. In addition to this, the half bridge control unit has terminals for external circuit components, such as a resistor and a capacitor, for setting the operation frequency the half bridge control unit. A half bridge control unit has been realized as an integrated circuit, manufactured by International Rectifier as type IR 2155.

With the previously known electronic power control having a switched-mode power supply, the lighting control is effected by means of simply increasing the operation frequency of the half bridge control unit and thereby decreasing the conducting time, i.e. on-time of at least one of the switching elements. When the output voltage of the power control is to be adjusted to its minimum level, about 1 Vᵣₘₛ, the operation frequency of the half bridge control unit will have to be increased to a level clearly above 100 kHz. A high frequency will cause problems. Radio frequency interference increases as the operation frequency increases. It is difficult, almost impossible, to attenuate these interferences by means of a simple filter arrangement. Another disadvantage is that the high operation frequency greatly increases the switching losses of the switching elements, i.e. the transistors. This will increase the total losses of the power control.

The prior art document GB-A-2085243 discloses an apparatus for driving a heating load circuit and in particular a work coil of induction heating system. The work coil is connected between mid-points of a pair of power supply leads which are connected to form a parallel circuit. Power field effect transistors are connected to the leads on respective sides of mid-points so that both halves of the leads are normally open circuits. A control circuit is provided to switch the field effect transistors alternatively on and off, which causes current flow through the work coil first in one direction and then in another direction. The control circuit comprises a frequency generator, which supplies a pulse train to a pulse width modulator, which in turn feeds a two phase generator. The generator feeds the triggering pulses alternatively to the field effect transistors. An automatic tuning device is provided to adjust the output frequency of the frequency generator so that the load circuit is driven at its resonance frequency. However, there is no hint to use the automatic tuning device for controlling the operating frequency.

The purpose of the invention is to disclose a new electronic power control having a switched-mode power supply to solve the above-mentioned problems. An especial purpose of the invention is to disclose a power control with a relatively constant half bridge operation frequency, even though the electrical output power to be fed to the load is widely adjustable.

The characterizing features of an electronic power control having a switched-mode power supply according to the invention are disclosed in the independent claim. The power control according to the invention comprises a half bridge control unit with an oscillator circuit and two control units and at least two switching elements, such as field effect transistors, which are most preferably arranged in half bridge configuration and which have been connected by their gates to the control unit outputs of the half bridge control unit and where the switching time of the switching elements can be adjusted by changing the duty cycle of the oscillator circuit output voltage, whereby the electrical power fed to the load is adjusted, the half bridge control unit being equipped with terminals for connecting external circuit components, especially a resistor and a capacitor, for setting the operation frequency of the half bridge control unit. According to the invention, a control circuit is arranged in the half bridge operation frequency terminals, the control circuit comprising an active resistor circuit and a capacitor known as such, the active resistor circuit comprising two adjustable resistors, one of which is arranged so as to operate when the capacitor is being charged, and the other is arranged to operate when the capacitor is being discharged.

Advantageous embodiments of the invention are described in the dependent claims.

The advantage of the invention is that with a circuit arrangement according to the invention the switching circuit operating frequency can be kept within a reasonable fluctuating range, preferably the frequency is almost constant.

A further advantage of the invention is that as the maximum operating frequency of the switching circuit is reasonably low, radio frequency interferences can be easily controlled.

Another advantage of the invention is that the switching losses of the switching elements, especially the field effect transistors, are minimized while operation frequency is kept within a reasonable range.

Yet another advantage of the invention is that a control circuit according to the invention is reliable, simple and easy to realize.

In the following, the invention is disclosed in more detail by means of reference to the appended drawings, of which
- figure 1: is a prior art electronic power supply circuit having a switched-mode power supply;
- figure 2: is a schematic diagram of a half bridge control circuit;
- figure 3: is an electronic power control according to the invention having a switched-mode power supply;
- figures 4 - 8: illustrate the operation of the switching circuit of figure 3 in different control situations.

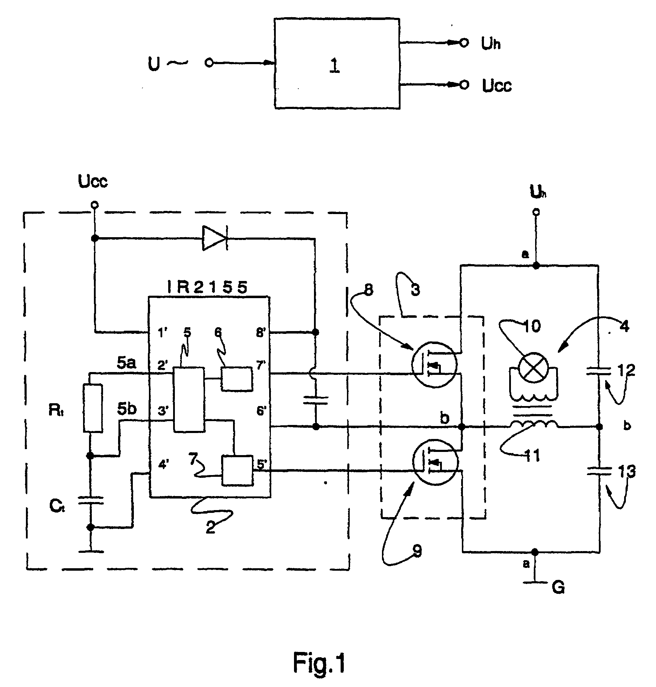

Figure 1 illustrates a prior art electronic power supply circuit for lighting fixtures. This power supply circuit comprises a rectifier 1, half bridge control unit 2 and a switching unit 3. The lighting fixture circuit 4 is, in turn, connected to the output of the terminal unit 3. In this case, the power supply circuit forms a half-wave push-pull transformer. The rectifier 1 can be any suitable rectifier, preferably a diode bridge, the input of which is supplied with ac power, such as voltage U from the mains, and the output of which produces one or more rectified voltages of desired magnitude, such as the half bridge driving voltage U_{cc} and the (maximum) operating voltage Uₕ of the lighting fixture circuit 4.

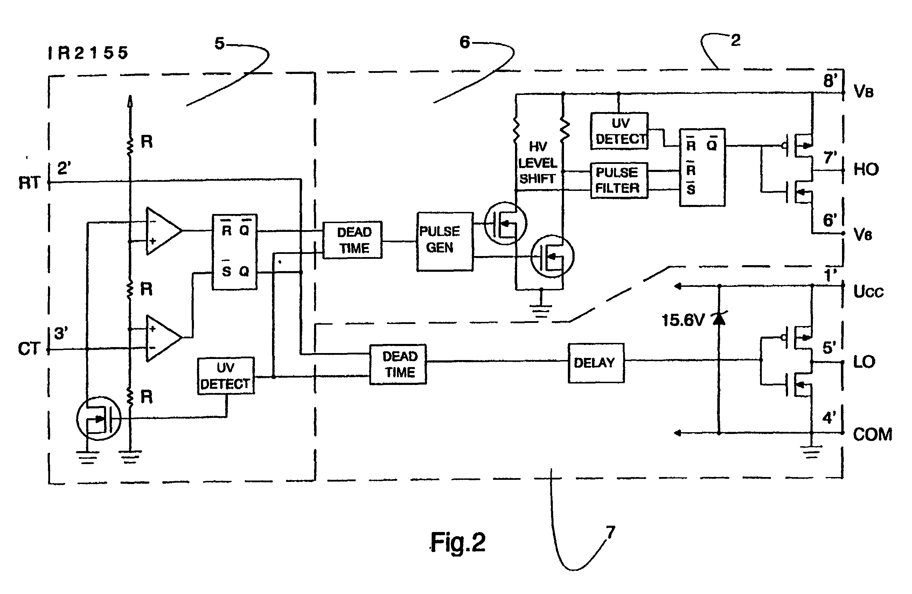

In this application, the half bridge control unit 2 has been realized with a commercially available integrated circuit of type IR2155. Figure 2 is a functional schematic diagram of this circuit. Half bridge control unit 2 is a self-oscillating field effect transistor (MOS) gate controller, the driving voltage of which is a suitable dc voltage U_{cc}. The control unit 2 also comprises an oscillator unit 5 and two control units 6 and 7. Oscillator unit 5 is a programmable oscillator, the oscillating frequency of which is set by means of an external resistor Rₜ and capacitor Cₜ (fig. 1). The control output HO of the first control unit 6 is a floating output connected to the gate of the first field effect transistor 8 of the switching unit 3. The second control output LO of the second control unit 7 is then connected to the gate of the second field effect transistor 9. The field effect transistors 8, 9 are then alternately controlled via control units 6, 7 of the control circuit 2 so that a control pulse in form of a high-frequency square wave is alternately fed to one transistor at a time from both control units. The half bridge control 2 contains a delay circuit for creating a dead-time between the state-change switches of the field effect transistors 8, 9. Thus, both the field effect transistors 8, 9 can not be simultaneously in conducting state, but there is a short dead-time during which both transistors are in non-conductive state between their switches to conducting states.

The switching unit 3 of figure 1 comprises two field effect transistors 8, 9, especially MOSFET-transistors, suitable for use as switching transistors, which are arranged in a half bridge configuration, i.e. in one branch of a bridge configuration. The attenuation capacitors 12, 13 are arranged in the other branch of the bridge configuration. Load, in this case the lighting fixture circuit 4, is connected by means of transformer 11 between the output terminals of the bridge, i.e. between the second terminals b-b, whereas the input voltage Uₕ and earth terminal G are connected between the input terminals of the bridge, in other words between the first terminals a-a. In this application, the lighting fixture circuit 4 comprises a halogen lamp.

The lighting fixture circuit 4 comprises an LC-resonance circuit, which is formed by the transformer 11 and capacitors 12, 13. The electrical power fed to the load, lamp 10, is determined by controlling the switching unit 3, especially the switching transistors 8, 9 thereof, to switch between conducting state and non-conducting state by means of control signal directed to the transistors from controller 2. The control frequency and hence also the operating frequency of control unit 2 is relatively high. This causes to, for example, the transformer 11 to be quite small in size.

In a power supply according to figure 1, the operating frequency of the oscillator circuit 5 of the controller 2 is set by means of resistor Rt and capacitor Cₜ, both of which are connected to the operating frequency terminals 5a, 5b of control unit 2. In such a self-oscillating connection the operating frequency is constant and it does not depend on the load. If this circuit is provided with a conventional power control, the operating frequency of the apparatus would have to be considerably increased in order to be able to set the output voltage of circuit 4 to the minimum. It should also be noted, that increasing the operating frequency of the oscillator circuit 5 and, respectively, increasing the operating frequency of the switching transistors of the switching unit 3 to above 100 kHz will also increase both the switching losses and the interferences conducted from the apparatus to the mains.

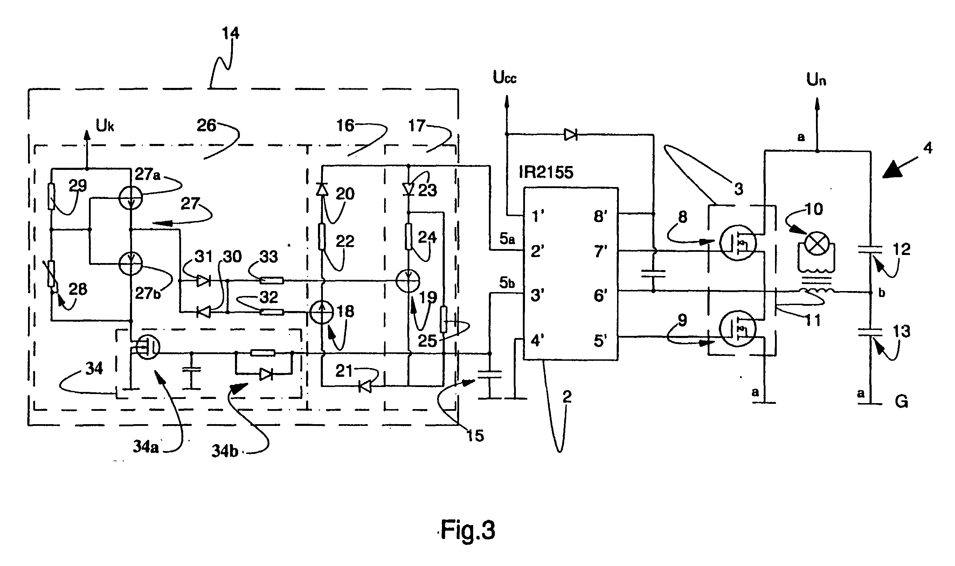

Figure 3 illustrates an electronic power control according to the invention having a switched-mode power supply, the basic construction of which is similar to that illustrated in figure 1. In the present embodiment, however, the operating frequency control terminals 5a, 5b of the switcmode power supply, i.e. the control circuit 2 are provided with a circuit comprising an active resistor circuit 14 and a capacitor 15. The active resistor circuit 14 comprises two adjustable resistors 16, 17, the first resistor 16 being arranged so as to operate when the capacitor 15 is being discharged and the second resistor 17 being arranged so as to operate when the capacitor 15 is being charged. Functionally, the capacitor 15 corresponds with the capacitor Cₜ of figure 1.

The active resistor circuit 14 comprises a first adjustable resistor 16 and a second adjustable resistor 17, which are connected parallel and which thereby form their own resistor branches. The resistors 16, 17 are most preferably realized by means of two transistors 18, 19. Additionally, in this embodiment, the first adjustable resistor 16 comprises, in addition to the first transistor 18, diodes 20, 21 and a resistor 22, all of which are arranged in the first resistor branch. The second adjustable resistor 17 comprises, in addition to the second transistor 19, diode 23 and resistor 24, all of which are arranged in the second resistor branch. In addition to this, the second resistor branch is provided with another resistor 25 arranged parallel with transistor 19 and resistor 24. The diodes 20, 21 and 23 of the resistor branches are arranged so as to conduct in opposite directions, as shown in figure 3.

The adjustable resistors 16, 17 are connected in parallel so that the first terminal of each is connected to the terminal 5a (resistor terminal) of the half bridge control unit 2, and the second terminal is connected to the terminal 5b (capacitor terminal) of the control unit. The capacitor 15 is connected from the capacitor terminal 5b to earth.

The active resistor circuit 14 also comprises control circuit 26 for resistors 16, 17. The control circuit 26 is realized as an emitter follower circuit 27, the base side of which has an adjustable resistor, preferably a potentiometer 28, for controlling the resistors 16, 17 and actually carrying out the frequency control. The emitter follower circuit 27 comprises two transistors 27a, 27b, connected in series. The control side of the transistors 27a, 27b are provided with a constant value resistor 29, connected in series with the potentiometer 28, with the intermediate terminal of these being connected to the base of both the transistors 27a, 27b. The output of the emitter follower circuit 27 is the terminal between transistors 27a, 27b i.e. the connected emitter terminals, the terminal being connected via a diode pair formed by opposing diodes 30, 31 to two base resistors 32, 33, the first of which 32 is connected to the first adjustable resistor 16, i.e. the base of transistor 18, and accordingly, and the second of which 33 is connected to the second adjustable resistor 17, i.e. the base of transistor 19.

The adjustable resistor, potentiometer 28, is preferably logarithmic. The serial resistor 29 and the logarithmic potentiometer 28 create an even control range. Because the potentiometer 28 is taken from the power control to within reach of the user, two conductors are enough for realizing this. Using a linear potentiometer instead of the logarithmic potentiometer would necessitate use of three conductors with no serial resistor. Even in this case, there would be some unused, non-effective areas in the borders of the control range. Using a logarithmic potentiometer 28 will also enable an effective control of the control range.

The emitter follower circuit 27 of the control circuit 26 also includes a suitably connected triggering circuit 34. The circuit 34 is used to trigger the oscillator unit of the semi-conductor control unit 2. The triggering circuit 34 comprises a field effect transistor 34a and a resistor-diode parallel circuit 34b. The field effect transistor 34a is connected in series with the emitter follower 27 and the trimpotentiometer 28 and earthed. The transistor 34a is connected via its gate and the diode-resistor parallel circuit 34b to the terminal 5b of the half bridge control unit 2. When the voltage U_{cc}, Uₖ is connected to a power supply, the half bridge control unit 2 and the active resistor connection circuit 14 are maintained at operating frequency in a 50/50 duty cycle by means of the field effect transistor 34a of the triggering circuit 34. In this case, the half bridge control 2 and the active resistor circuit 14 take up a small amount of current. When the voltage of terminal 5b has exceeded the thereshold voltage of the field effect transistor 34a, the operation of the half bridge control unit 2 and the active resistor connection circuit 14 returns to normal and can be adjusted by means of potentiometer 28.

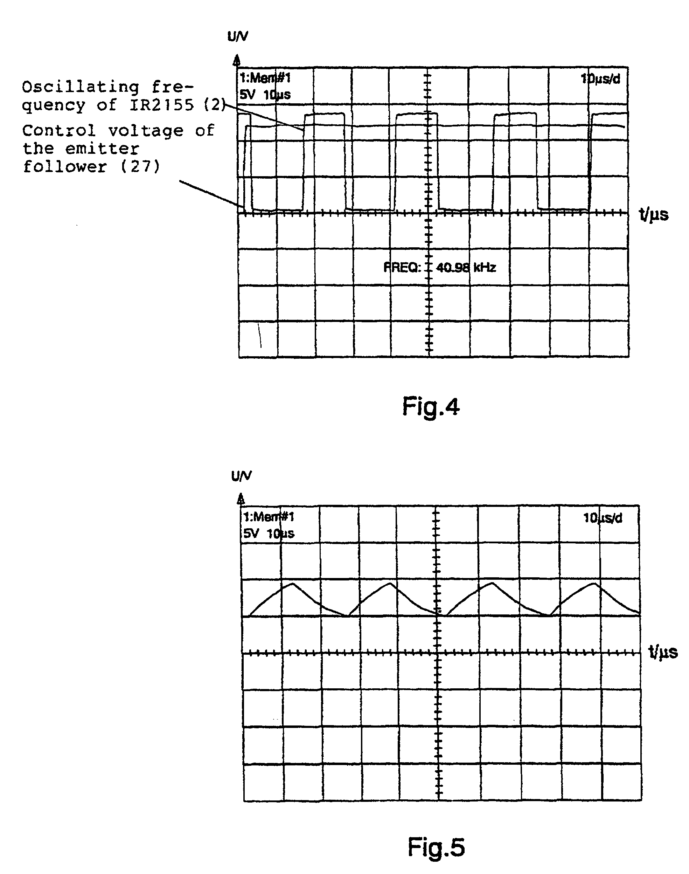

An electronic power control according to figure 3 works as follows. The description is made with reference to figures 4-8. Potentiometer 28, preferably a logarithmic potentiometer, is used for adjusting a desired control voltage from operating voltage Uₖ to the bases of the transistors 27a, 27b of the emitter follower 27. The control signal from emitter follower 27 is then directed to the adjustable resistors 16, 17, and, accordingly, to the bases of transistors 18, 19. The adjustable resistor 16, i.e. transistor 18, acts as a discharge route when discharging capacitor 15, and, accordingly, the adjustable resistor 17, i.e. transistor 19, acts as a charging route when charging capacitor 15. The sizing of the adjustable resistors 16, 17 enables desired charging and discharging times to be set for the capacitor 15. The components of the active resistor circuit 14 can be rated suitably to accomplish a nearly constant-frequency operation for the oscillator circuit 5 of the half bridge control unit 2, such as an IR2155 circuit, and further a nearly constant-frequency control signal to the outputs of the control units 6, 7 for the whole control range. The power fed to the load is controlled by means of the active resistor circuit 14 and the half bridge control unit 2 by first reducing, with the control signals, the conductivity time of the first field effect transistor 8, and then increasing the conductivity time of the second field effect transistor 9.

The half bridge control unit 2 and the active resistor circuit 14 work with a symmetrical duty cycle, i.e. with a 50/50 duty cycle, when the control voltage of the emitter follower 27 is nearly as large as the operating voltage Uₖ, that is when the potentiometer 28 is adjusted to its nominal rating (maximum value). Then, the transistor 18 of the adjustable resistor 16 receives almost all control power, and the transistor 19 of the other adjustable resistor 17 is in non-conductive state. In this state, the capacitor 15 is discharged via the first adjustable resistor 16, in other words via the transistor 18, and the capacitor 15 accordingly is charged almost completely via resistor 25. Figure 4 illustrates both the operating frequency of the half bridge control unit 2 (circuit IR2155) in terminal 5a, voltage over the potentiometer 28 and the voltage over the capacitor 15. Figure 5 illustrates charging and discharging of the capacitor 15 with the above-mentioned 50/50 duty cycle.

When the potentiometer 28 is adjusted and its resistance is reduced, the operating frequency of the half bridge control unit, the circuit IR2155, first starts to increase and it reaches its maximum limit, about 60 kHz in one application. The increase of the frequency is due to differences in components and the simplicity of the circuit. Nevertheless, it should be noted, that the frequency does not increase to a considerable degree.

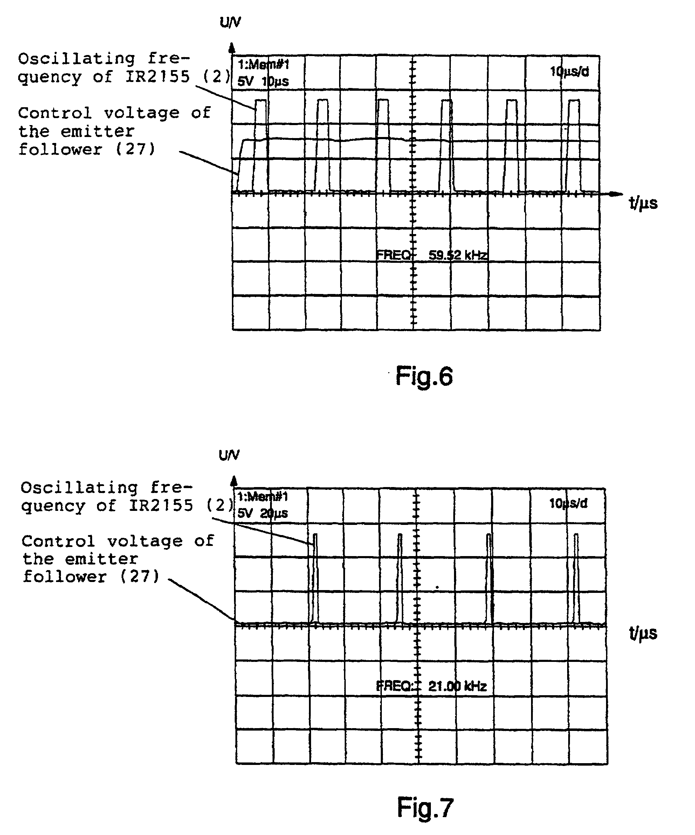

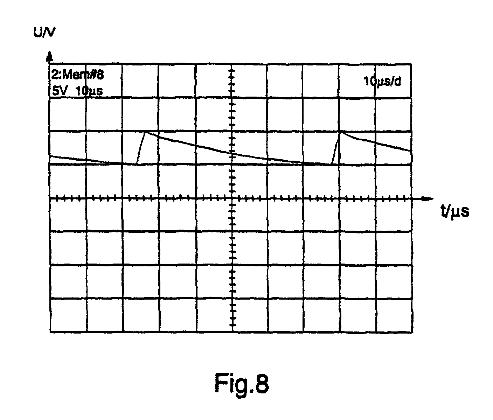

When the adjustment is going towards the minimum in the middle of the adjusting range of the potentiometer 28, discharging time of the capacitor 15 begins to increase. The charging time of the capacitor 15 does not, however, significantly change (cf. fig. 8). Thus, the total frequency of the half bridge control unit, the circuit 2155, starts to decrease. It should be noted, that the frequency does not decrease below 20 kHz. The frequency is not supposed to decrease too low, because at such low frequencies the power control starts to make audible noises. Figure 7 illustrates the operating frequency of the circuit IR2155 at minimum control.

Theoretically, it is possible to achieve an almost constant frequency operation of the active resistor circuit 14 for the whole control range of the potentiometer 28. In practice, however, it is mainly the differences in the individual components that cause the operating frequency of the half bridge control unit 2, the circuit 2155, to fluctuate between 25-55 kHz. At a 50/50 duty cycle, the operating frequency is in this case about 45 kHz. The frequency fluctuations do not have a significant effect on the RF interferences, (less than 3 dB). The switching losses of the switching field effect transistors, especially MOSFET transistors, do not significantly increase. With a constant frequency adjustment, the lighting power of a halogen lamp or a corresponding lighting fixture can be evenly adjusted throughout the whole control range of the potentiometer 28, so that there is no empty control range in the potentiometer.

In the above, the invention has been disclosed in detail, but it is evident, that the invention can be modified in many ways within the range of the appended patent claims.

## Claims

1. An electronic power control with a switched-mode power supply, especially for use in dimmer applications, having a half bridge control unit (2) with an oscillator circuit (5) and two control units (6, 7) and at least two switching elements, such as field effect transistors (8, 9), the transistors being preferably arranged in a half bridge configuration and being connected by their control grids to the outputs of the control units (6, 7) of the half bridge control unit (2), and in which power control the switching time of the switching elements (8, 9), and thereby also the electrical power fed to the load (K), can be controlled by changing the duty cycle of the oscillator circuit (5) output voltage, the half bridge control unit (2) being provided with terminals (5a, 5b) for connecting external components, especially a resistor and a capacitor thereto for setting the operating frequency of the half bridge control unit, **characterized in that** the operating frequency terminals (5a, 5b) of the half bridge control unit (2) are provided with an active resistor circuit (14) and a capacitor (15), known as such, the active resistor circuit (14) comprising two adjustable resistors (16, 17), the first (16) of which is arranged to operate when the capacitor (15) is being charged and the second (17) of which is arranged to operate when the capacitor (15) is being discharged.

2. A switched-mode power supply according to claim 1, **characterized in that** the adjustable resistors (16, 17) are realized by means of transistors (18, 19).

3. A switched-mode power supply according to claim 2, **characterized in that** the the active resistor circuit (14) comprises a control circuit (26) of the transistor pair (18, 19) acting as adjustable resistors, the control circuit (26) comprising an adjustable resistor, such as a potentiometer (28),

4. A switched-mode power supply according to claim 3, **characterized in that** the control circuit (26) comprises an emitter follower circuit (27) following the potentiometer (28), the outputs of the follower circuit (27) being connected to the bases of the transistors (18, 19) of the resistor circuit (16, 17).

5. A switched-mode power supply according to claim 3 or 4, **characterized in that** the potentiometer (28) is logarithmic.

## Patentansprüche

1. Elektronische Leistungssteuerung mit einem Schaltnetzteil, insbesondere für Dimmeranwendungen. umfassend eine Halbbrückensteuereinheit (2) mit einer Oszillatorschaltung (5) und zwei Steuereinheiten (6, 7) und wenigstens zwei Schaltelementen wie z. B. Feldeffekttransistoren (8, 9), wobei die Transistoren vorzugsweise in einer Halbbrückenkonfiguration angeordnet sind und mit ihren Steuer-Gates bzw. Basen mit den Ausgängen der Steuereinheiten (6, 7) der Halbbrückensteuerungseinheit (2) verbunden sind, und in welcher Leistungssteuerung die Schaltzeit der Schaltelemente (8, 9) und dabei auch die der Last (K) zugeführte elektrische Leistung gesteuert werden kann durch Änderung des Arbeitszyklus der Ausgangsspannung der Oszillatorschaltung (5), wobei die Halbbrückenstoucrungscinhcit (2) mit Anschlüssen (5a, 5b) versehen ist, um externe Komponenten anzuschließen, insbesondere einen Widerstand und einen Kondensator, um die Betriebsfrequenz der Halbbrückensteuerungseinheit einzustellen.
**dadurch gekennzeichnet, dass** an die Betriebsfrequenzanschlüsse (5a, 5b) der Halbbrückensteuerungseinheit (2) eine aktive Widerstandsschaltung (14) und ein Kondensator (15) angeschlossen sind, die als solche bekannt sind, wobei die aktive Widerstandsschaltung (14) zwei einstellbare Widerstände (16, 17) umfasst, von denen der erste (16) derart angeordnet ist, dass er tätig ist. wenn der Kondensator (15) geladen wird und der zweite (17) derart angeordnet ist, dass er tätig ist, wenn der Kondensator (15) entladen wird.

2. Schaltnetzteil nach Anspruch 1,
**dadurch gekennzeichnet, dass** die einstellbaren Widerstände (16, 17) durch Transistoren (18, 19) realisiert sind.

3. Schaltnetzteil nach Anspruch 2,
**dadurch gekennzeichnet, dass** die aktive Widerstandssschaltung (14) eine Steuerschaltung (26) für das als einstellbare Widerstände agierende Transistorpaar (18, 19) umfasst. wobei die Steuerschaltung (26) einen einstellbaren Widerstand, wie z. B. ein Potentiometer (28), umfasst.

4. Schaltnetzteil nach Anspruch 3,
**dadurch gekennzeichnet, dass** die Steuerschaltung (26) eine Emitter-Folge-Schaltung (27) umfasst, die dem Potentiometer (28) folgt, wobei die Ausgänge der Folge-Schaltung (27) mit den Basen der Transistoren (18, 19) der Widerstandsschaltung (16, 17) verbunden sind.

5. Schaltnetzteil nach Anspruch 3 oder 4,
**dadurch gekennzeichnet, dass** das Potentiometer (28) logarithmisch ist.

## Revendications

1. Commande électronique de puissance ayant une alimentation de puissance à mode commuté, en particulier pour être utilisée dans des applications de gradateur de lumière, ayant une unité de commande en demi-pont (2) avec un circuit oscillant (5) et deux unités de commande (6, 7) et au moins deux éléments de commutation, tels que des transistors à effet de champ (8, 9), les transistors étant de préférence agencés dans une configuration en demi-pont et étant connectés par leurs grilles de commande aux sorties des unités de commande (6, 7) de l'unité de commande en demi-pont (2), commande de puissance dans laquelle, le temps de commutation des éléments de commutation (8, 9), et ainsi également la puissance électrique fournie à la charge (K), peuvent être commandés en changeant le cycle opératoire de la tension de sortie du circuit oscillant (5), l'unité de commande en demi-pont (2) étant munie de bornes (Sa, 5b) pour une connexion de composants externes, en particulier une résistance et un condensateur destinés à établir la fréquence de fonctionnement de l'unité de commande en demi-pont, **caractérisée en ce que** les bornes de fréquence de fonctionnement (5a, 5b) de l'unité de commande en demi-pont (2) sont munies d'un circuit de résistances actif (14) et d'un condensateur (15), connus en soi, le circuit de résistances actif (14) comportant deux résistances ajustables (16, 17), la première (16) étant conçue pour fonctionner lorsque le condensateur (15) est chargé et la seconde (17) étant conçue pour fonctionner lorsque le condensateur (15) est déchargé.

2. Alimentation de puissance à mode commuté selon la revendication 1, **caractérisée en ce que** les résistances ajustables (16, 17) sont réalisées au moyen de transistors (18, 19).

3. Alimentation de puissance à mode commuté selon la revendication 2, **caractérisée en ce que** le circuit de résistances actif (14) comporte un circuit de commande (26) de la paire de transistors (18, 19) agissant en tant que résistances ajustables, le circuit de commande (26) comportant une résistance ajustable, telle qu'un potentiomètre (28).

4. Alimentation de puissance à mode commuté selon la revendication 3, **caractérisée en ce que** le circuit de commande (26) comporte un circuit émetteur-suiveur (27) suivant le potentiomètre (28), les sorties du circuit suiveur (27) étant connectées aux bases des transistors (18, 19) du circuit de résistances (16, 17).

5. Alimentation de puissance à mode commuté selon la revendication 3 ou 4, **caractérisée en ce que** le potentiomètre (28) est logarithmique.
